# EUROPEAN PATENT APPLICATION

(11) **EP 3 828 868 A2**
(43) Date of publication of application: **02.06.2021**
(21) Application number: 21164034.7
(22) Date of filing: 22.03.2021
(51) Int. Cl.: G09B 5/06, G09B 7/00

(54) **METHOD AND APPARATUS FOR DETERMINING KEY LEARNING CONTENT, DEVICE, STORAGE MEDIUM, AND COMPUTER PROGRAM PRODUCT**

(30) Priority: 16.06.2020 CN 202010549031
(71) Applicant: Baidu Online Network Technology (Beijing) Co., Ltd, Beijing 100085 (CN)
(72) Inventor: LIU, Junqi, Haidian District, Beijing 100085 (CN)
(74) Representative: Mewburn Ellis LLP

(57) **Abstract**

A method and apparatus for determining key learning content, an electronic device, a computer-readable storage medium, and a computer program product. An implementation of the method may include: acquiring learning feature data of a user at at different interactive learning stages of the online learning, where the interactive learning stage includes: at least one of a watching stage, an online answering stage, a voice interaction stage, and a movement imitation stage; analyzing learning feature data corresponding to an interactive learning stage by using a preset analysis mode corresponding to the interactive learning stage, to obtain an actual learning concentration corresponding to the interactive learning stage; and determining, according to the actual learning concentration, a target period with an actual learning concentration not meeting a preset learning concentration requirement, and determining learning content corresponding to the target period as the key learning content.

## Description

### TECHNICAL FIELD

Embodiments of the present disclosure relate to the technical field of data processing, and particularly to the technical fields of image recognition, voice recognition, face recognition, and joint recognition.

### BACKGROUND

In recent years, with the rapid spread of smart phones, online education has become more popular. However, compared with offline face-to-face education of teachers and students, the online education is interfered by more aspects, resulting in poor online learning effect.

The most advantageous way to improve the learning effect is to determine the part that an online learner does not concentrate on in the learning process, and provide a targeted relearning scheme for this part as a key learning part. However, the prior art usually starts with the test of the learning result to reversely derive the content of this part.

### SUMMARY

Embodiments of the present disclosure provides a method for determining key learning content, an apparatus, an electronic device, a computer readable storage medium, and a computer program product.

In a first aspect, some embodiments of the present disclosure provide a method for determining key learning content. The method includes: acquiring learning feature data of a user at different interactive learning stages of online learning, where the interactive learning stage includes at least one of: a watching stage, an online answering stage, a voice interaction stage, or a movement imitation stage; analyzing learning feature data corresponding to an interactive learning stage by using a preset analysis mode corresponding to the interactive learning stage, to obtain an actual learning concentration corresponding to the interactive learning stage; and determining, according to the actual learning concentration, a target period with an actual learning concentration not meeting a preset learning concentration requirement, and determining learning content corresponding to the target period as the key learning content.

In a second aspect, some embodiments of the present disclosure provide an apparatus for determining key learning content. The apparatus includes: a learning feature data acquisition module, configured to acquire learning feature data of a user at different interactive learning stages of online learning, where the interactive learning stage includes at least one of: a watching stage, an online answering stage, a voice interaction stage, or a movement imitation stage; an actual learning concentration determination unit, configured to analyze learning feature data corresponding to an interactive learning stage by using a preset analysis mode corresponding to the interactive learning stage, to obtain an actual learning concentration corresponding to the interactive learning stage; and a key learning content determination unit, configured to determine, according to the actual learning concentration, a target period with an actual learning concentration not meeting a preset learning concentration requirement, and determine learning content corresponding to the target period as the key learning content.

In a third aspect, some embodiments of the present disclosure provide an electronic device. The electronic device includes: at least one processor; and a memory communicatively connected with the at least one processor; where the memory stores instructions executable by the at least one processor, and the instructions, when executed by the at least one processor, causes the at least one processor to execute the method for determining key learning content according to any one of embodiments of the first aspect.

In a fourth aspect, some embodiments of the present disclosure provide a non-transitory computer-readable storage medium storing computer instructions, where the computer instructions, when executed by a processor, cause the processor to execute the method for determining key learning content according to any one of embodiments of the first aspect.

In a fifth aspect, some embodiments of the present disclosure provide a computer program product. The computer program product includes a computer program, the computer program, when executed by a processor, causes the processor to implement the method for determining key learning content according to any one of embodiments of the first aspect.

According to method for determining key learning content, apparatus, electronic device, computer readable storage medium and computer program product, first learning feature data of a user at different interactive learning stages of online learning is acquired, where the interactive learning stage includes at least one of: a watching stage, an online answering stage, a voice interaction stage, or a movement imitation stage; then the learning feature data corresponding to an interactive learning stage is analyzed by using a preset analysis mode corresponding to the interactive learning stage, to obtain an actual learning concentration corresponding to the interactive learning stage; then according to the actual learning concentration, a target period with an actual learning concentration not meeting a preset learning concentration requirement is determined, and the learning content corresponding to the target period is determined as the key learning content.

Different from the reverse-derivation solution provided by the prior art, the method for determining key learning content according to embodiments of the present disclosure is to positively and accurately determine a real-time concentration parameter by collecting feature data related to the learning concentration degree of the user from each interactive learning stage of user's online learning process, and determine content corresponding to a non-concentration period as the key learning content according to the concentration parameter. By combining different learning feature data collected at different interactive learning stages by different collection means, the determined learning concentration at each stage can be more accurate, thereby ensuring that the determined key learning content is highly targeted, shortening user's time spent on learning the key learning content as much as possible, and improving the efficiency of online learning.

It should be understood that the content described in this section is neither intended to identify key or important features of embodiments of the present disclosure, nor intended to limit the scope of the present disclosure. Other features of the present disclosure will become understandable through the following description.

### BRIEF DESCRIPTION OF THE DRAWINGS

After reading detailed descriptions of non-limiting embodiments with reference to the following accompanying drawings, other features, objectives and advantages of the present disclosure will become more apparent.
Fig. 1 is an illustrative system architecture to which embodiments of the present disclosure may be applied;
Fig. 2 is a flowchart of a method for determining key learning content according to an embodiment of the present disclosure;
Fig. 3 is a flowchart of a method for acquiring learning feature data and determining actual learning concentration for a watching learning stage according to an embodiment of the present disclosure;
Fig. 4 is a flowchart of a method for acquiring learning feature data and determining actual learning concentration for an online answering stage according to an embodiment of the present disclosure;
Fig. 5 is a flowchart of a method for acquiring learning feature data and determining actual learning concentration for a voice interaction stage according to an embodiment of the present disclosure;
Fig. 6 is a flowchart of a method for acquiring learning feature data and determining actual learning concentration for a movement imitation stage according to an embodiment of the present disclosure;
Fig. 7 is a schematic structural diagram of an apparatus for determining key learning content according to an embodiment of the present disclosure; and
Fig. 8 is a block diagram of an electronic device suitable for implementing the method for determining key learning content according to embodiments of the present disclosure.

### DETAILED DESCRIPTION OF EMBODIMENTS

Embodiments of present disclosure will be described below in detail with reference to the accompanying drawings. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should also be noted that some embodiments in the present disclosure and some features in the disclosure may be combined with each other on a non-conflict basis. Features of the present disclosure will be described below in detail with reference to the accompanying drawings and in combination with embodiments.

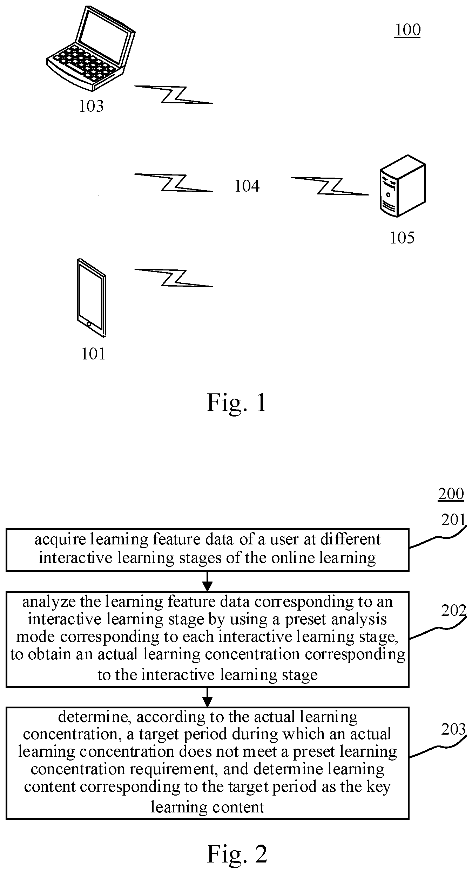

Fig. 1 shows a system architecture 100 to which a method and apparatus for determining key learning content, an electronic device and a computer-readable storage medium of embodiments of the present disclosure may be applied.

As shown in Fig. 1, the system architecture 100 may include an online learning terminal 101, 102, or 103, a network 104, and a server 105. The network 104 serves as a medium providing a communication link between the online learning terminal 101, 102, or 103 and the server 105. The network 104 may include various types of connections, such as wired or wireless communication links, or optical fiber cables.

A user may use the online learning terminal 101, 102, or 103 to interact with the server 105 through the network 104 to receive or send messages and the like. The online learning terminal 101, 102, or 103 and the server 105 may be installed with various applications for implementing information communication between the two, such as online learning applications, online dating applications, and instant messaging applications.

The online learning terminal 101, 102, or 103 may be hardware or software. When the online learning terminal 101, 102, or 103 is hardware, it may be various electronic devices with a display screen, including but not limited to a smart phone, a tablet computer, a laptop computer, a desktop computer, and the like. When the online learning terminal 101, 102, or 103 is software, it may be installed in the electronic devices listed above, and may be implemented as a plurality of software programs or software modules, or as a single software program or software module. Specific limitations are not given here.

The online learning terminal 101, 102, or 103 and the server 105 may be hardware or software. When the learning terminal 101, 102, or 103 is hardware, it may be various electronic devices with a display screen, including but not limited to a smart phone, a tablet computer, a laptop portable computer, a desktop computer, and the like. When the learning terminal 101, 102, or 103is software, it may be installed in the electronic devices listed above. It may be implemented as a plurality of software programs or software modules (for example, it may be divided into a plurality of modules according to different interactive learning stages, and each is responsible for acquiring learning feature data of an interactive learning stage), or as a single software program or software module. Specific limitations are not given here. When the server 105 is hardware, it may be implemented as a distributed server cluster composed of a plurality of servers, or as a single server. When the server is software, it may be implemented as a plurality of software programs or software modules (for example, used to provide key learning content determination services), or as a single software program or software module. Specific limitations are not given here.

The server 105 may provide various services through various built-in applications. Taking an online learning application that can provide key learning content determination services as an example, the server 105 can achieve the following effects when running the online learning application: first, learning feature data, collected by the online learning terminal 101, 102, or 103, of a user at different interactive learning stages of online learning is acquired from the online learning terminal 101, 102, or 103 through the network 104, and then the learning feature data corresponding to an interactive learning stage is analyzed by using a preset analysis mode corresponding to this interactive learning stage to obtain a corresponding actual learning concentration; next, a target period with an actual leaning concentration not meeting a preset learning concentration requirement is determined according to the actual learning concentration, and finally, learning content corresponding to the target period is determined as the key learning content. That is, the server 105 finally determines, through the processing steps, the part of non-concentration learning content during user's online learning process using the online learning terminal, and outputs the same as user's subsequent key learning content.

It should be pointed out that the learning feature data of the user at different interactive learning stages of the online learning may be obtained in real time from the online learning terminal 101, 102, or 103, or pre-stored locally in the server 105. Particularly, when the server 105 can directly obtain the learning feature data locally, the exemplary system architecture 100 may not include the online learning terminal 101, 102, or 103 and the network 104.

The online learning terminal 101, 102, or 103 may obtain the learning feature data of the user at each interactive learning stage of the online learning through its built-in sensors or an external detection device that can establish a data connection with it, such as a face recognition camera, an ambient light intensity sensor, a touch screen click sensor, and a gesture sensor.

The method for determining key learning content according to subsequent embodiments of the present disclosure is generally executed by the server 105 with strong computing capabilities. Accordingly, the apparatus for determining key learning content is generally arranged in the server 105. However, it should also be pointed out that when the online learning terminal 101, 102, or 103 has the computing capabilities that meet the requirements, the online learning terminal 101, 102, or 103 may also complete the various computations performed by the server 105 through online learning applications installed therein to obtain the same results. Especially in the case where a plurality of online learning terminals with different computing capabilities are used at the same time, the method for determining key learning content may also be executed by some of the online learning terminals with strong computing capabilities (such as a desktop computer), to appropriately reduce the computing pressure of the server 105. Accordingly, the apparatus for determining key learning content may also be arranged in the online learning terminal 101, 102, or 103. In this case, the exemplary system architecture 100 may not include the server 105 and the network 104.

It should be understood that the numbers of the online learning terminals, the network, and the server in Fig. 1 are merely illustrative. According to implementation needs, there may be any number of online learning terminals, networks and servers.

Continuing to refer to Fig. 2, an implementation process 200 of the method for determining key learning content according to an embodiment of the present disclosure is shown. The method for determining key learning content may include following steps:

Step 201: acquiring learning feature data of a user at different interactive learning stages of the online learning.

In this step, the execution body (for example, the server 105 shown in Fig. 1) of the method for determining key learning content may acquire the learning feature data of the user at different interactive learning stages of the online learning by. The interactive learning stages may include, but are not limited to, at least one of: a watching stage, an online answering stage, a voice interaction stage, or a movement imitation stage.

The watching stage refers to a stage at which the user needs to learn knowledge from dynamic video content presented by an online learning application by watching; in the watching stage, the user usually only needs to directly watch the playback interface of the online learning application; therefore, some facial information (such as face orientation and eye viewpoints) of the user can be used as the learning feature data that characterizes user's learning concentration at this stage. The online answering stage refers to a stage at which the user is required to answer some given questions in various forms, so time information (such as delay of answering and time length consumed by answering each question) or accuracy information is used as the learning feature data that characterizes user's learning concentration at this stage. The voice interaction stage usually occurs in scenarios such as following text reading or voice response, so the matching degree between the user's actual voice data and preset standard voice data can be used as the learning feature data that characterizes the user's learning concentration at this stage. The movement imitation stage usually occurs in some scenarios that require the user to do some specific movements according to instructions (such as online physical education classes, physical classes, and fitness classes) and some scenarios where the correctness of intermediate derivation steps is verified through movements (such as the derivation of Lorentz force and the direction of Ampere force), so the matching degree between user's actual body movement information and a standard movement can be used as the learning feature data that characterizes user's learning concentration at this stage.

It should be pointed out that the learning feature data of the user at different interactive learning stages of the online learning may be acquired directly from a local storage device by the execution body, and may also be acquired from a non-local storage device (such as the online learning terminal 101, 102, or 103 shown in Fig. 1). The local storage device may be a data storage module configured in the execution body, such as a server hard disk; and in this case, the learning feature data may be quickly acquired by local reading. The non-local storage device may also be any other electronic device configured to store data, such as some user terminals; and in this case, the execution body may acquire the required learning feature data by sending a teacher model acquisition command to the electronic device.

Step 202: analyzing learning feature data corresponding to an interactive learning stage by using a preset analysis mode corresponding to each interactive learning stage, to obtain an actual learning concentration corresponding to the interactive learning stage.

On the basis of step 201, this step 202 is intended to determine the actual learning concentration corresponding to the learning feature data acquired at each interactive learning stage. Due to the difference between different interactive learning stages, the actual learning concentrations of different interactive learning stages are not determined based on a unified analysis mode in this step, but an analysis mode in accordance with the characteristics of each interactive learning stage is formulated in advance for each interactive learning stage according to different characteristics represented by the user at different interactive learning stages and related to the learning concentrations, so that the accurate actual learning concentration is determined through the matching analysis mode.

Taking user's actual face orientation acquired in the watching stage as an example, the user's learning concentration at this stage can be simply determined by judging whether the actual face orientation is perpendicular to the playback interface of the online learning application. Taking simple dichotomy as an example, if the actual face orientation is not perpendicular to the playback interface of the online learning application, the conclusion that the user does not concentrate on the online learning application can be simply drawn; and if the actual face orientation is perpendicular to the playback interface of the online learning application, the conclusion that the user concentrates on the online learning application can be simply drawn. The same analysis is obviously not suitable for the online answering stage, because the answering often involves a calculation process, the calculation process is often not completed directly on the online learning terminal where the online learning application is located, and the user is more inclined to complete this process on draft paper that is more convenient for writing. Therefore, for the online answering stage, the determination of the concentration can be adjusted to acquire the actual delay of answering, and whether the user currently concentrates on the online learning application is determined by judging whether the actual delay of answering exceeds a preset answering delay, for example, the user is watching TV, and the user starts to answer the question after a long time since the question to be answered is displayed, then the delay of answering is relatively long.

By analogy, appropriate learning concentration analysis modes can be flexibly formulated for different interactive learning stages according to specific circumstances of the different interactive stages in actual application scenarios, so as to obtain more accurate actual learning concentrations. It should be understood that the actual learning concentration may be represented in a variety of ways. For example, under simple dichotomy, the actual learning concentration may be simply reflected in two conclusions: concentration and non-concentration. In complex judgment scenarios, the actual learning concentration may also be expressed in a more refined and quantitative way, each judgment conclusion that may indicate user's non-concentration may be deducted from full marks to different degrees, and the final score is used as the actual learning concentration.

Step 203: determining, according to the actual learning concentration, a target period with an actual learning concentration not meet a preset learning concentration requirement, and determining learning content corresponding to the target period as the key learning content.

On the basis of step 202, this step is intended to first determine, according to the actual learning concentration, the target period with an actual learning concentration not meet the preset learning concentration requirement and then determine the learning content corresponding to the target period as the key learning content by the execution body.

It should be understood that, according to the actual learning concentration representation used in the actual application scenario in step 202, the preset learning concentration requirement should also be matching. For example, when specific conclusions of concentration and non-concentration are obtained by simple dichotomy, the preset learning concentration requirement should be whether concentrating, that is, the conclusion of concentration is determined as meeting the preset learning concentration requirement, or else determined as not meeting the preset learning concentration requirement. When specific numerical representation is used, the preset learning concentration requirement may be set as 60 scores of the centesimal system, that is, after the factor that characterizes user's non-concentration is deducted from 100 scores, if the remaining score is still more than or equal to 60, it is determined as meeting the learning concentration requirement; and if the remaining score is less than 60, it is determined as not meeting the learning concentration requirement.

The learning content corresponding to the target period includes not only the most basic contents, but also related learning materials from other sources, so as to enrich and as much as possible allow the user to make up for the lack of knowledge through the learning of this part of key learning content.

Further, after the key learning content is determined by the execution body, in order to put the key learning content to good use, the key learning content may also be sent to the online learning terminal used by the corresponding user in by push, and the online learning terminal presents the received key learning content to the user in a suitable form and at right time, thereby finally achieving the purpose of improving the effect of user's online learning.

Different from the reverse-derivation solution provided by the prior art, the method for determining key learning content according to embodiments of the present disclosure is to positively and accurately determine a real-time concentration parameter by collecting feature data related to the learning concentration degree of the user from each interactive learning stage of user's online learning process, and determine content corresponding to a non-concentration period as the key learning content according to the concentration parameter. By combining different learning feature data collected at different interactive learning stages by different collection means, the determined learning concentration at each stage can be more accurate, thereby ensuring that the determined key learning content is highly targeted, shortening user's time spent on learning the key learning content as much as possible, and improving the efficiency of online learning.

On the basis of the above-mentioned embodiment, this embodiment further gives a specific implementation for each specific interactive learning stage on what kind of information is collected as learning feature data and determining the actual learning concentration:

For the watching learning stage, the user's actual face orientation and actual viewpoint position at this stage are used as the learning feature data at this stage, and a first judgment result is obtained by judging whether the actual face orientation is perpendicular to the playback interface of the online learning application; a second judgment result is obtained by judging whether the actual viewpoint position falls within the playback interface region of the online learning application; and finally, the actual learning concentration at the watching stage is comprehensively determined based on the first judgment result and the second judgment result. It should be understood that, to some extent that the two feature data can independently characterize whether the user concentrates on the online learning application, and the above implementation scheme makes corresponding judgments through the two feature data, and comprehensively determines the result through the two judgment results. Simply, when at least one of the two judgment results is "yes", it may be determined that the user currently concentrates on the online learning application. Strictly, only when the two judgment results are both "yes", it may be determined that the user currently concentrates on the online learning application.

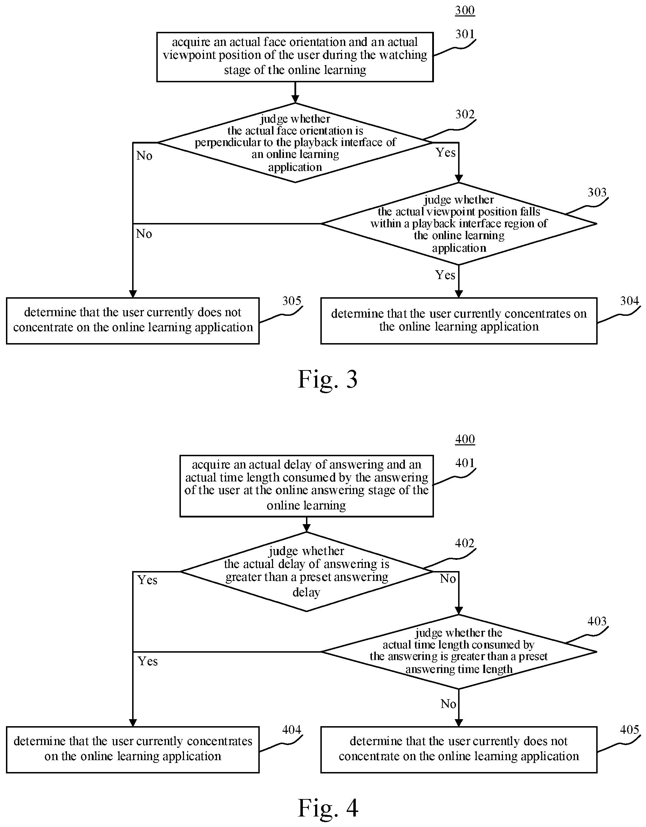

A simple dichotomy-based implementation for analyzing that the actual learning concentration is concentration/non-concentration may be referred to the flowchart shown in Fig. 3, including the following steps:

Step 301: acquiring an actual face orientation and an actual viewpoint position of the user during the watching stage of the online learning.

The actual face orientation may be acquired through a built-in face recognition camera of an online learning terminal, and the actual viewpoint position may be acquired by further analysis on the eye-related part in a face image.

Step 302: judging whether the actual face orientation is perpendicular to the playback interface of an online learning application, and if yes, performing step 303, otherwise performing step 304.

Step 303: judging whether the actual viewpoint position falls within a playback interface region of the online learning application.

This step is based on the judgment in step 302 that the actual face orientation is perpendicular to the playback interface of the online learning application. The actual face orientation perpendicular to the playback interface of the online learning application may represent to certain extent that the user's current attention concentrates on the playback interface of the online learning application, but in order to improve the accuracy of the judgment result and reduce the misjudgment rate, the execution body here further judges whether the actual viewpoint position falls within the playback interface region of the online learning application, so as to determine from another angle whether the user currently really concentrates on the playback interface of the online learning application.

Step 305: determining that the user currently does not concentrate on the online learning application.

This step is based on the result of the judgment in step 302 that the actual face orientation is not perpendicular to the playback interface of the online learning application and the result of judgment in step 303 that the actual viewpoint position does not fall within the playback interface region of the online learning application. The actual face orientation is not perpendicular to the playback interface of the online learning application, indicating that the user's current attention does not concentrate on the playback interface of the online learning application. On the basis that the actual face orientation is perpendicular to the playback interface of the online learning application, it is found that the actual viewpoint position does not fall within the playback interface region of the online learning application, indicating that the user is likely to concentrate on another interface at the same level as the playback interface, that is, the user is currently in a state of "fake learning" or "suspended learning", which will be determined as the user currently does not concentrate on the online learning application, that is, there is a period during which the user's actual learning concentration is non-concentration at the watching stage.

Step 304: determining that the user currently concentrates on the online learning application.

This step is based on the result of judgment in step 303 that the actual viewpoint position falls within the playback interface region of the online learning application, that is to say, only when both of the judgments are "yes", it can be considered that the user currently really concentrates on the online learning application, that is, there is no period when the user's actual learning concentration is non-concentration during the watching stage.

For the watching stage, the process 300 shown in Fig. 3 provides a way to draw the conclusion that the user currently concentrates on the online learning application through double judgments, which can effectively guarantee the accuracy of the conclusion and reduce the misjudgment rate.

For the online answering stage, a user's actual delay of answering and actual time length consumed by the answering at this stage are taken as the learning feature data at this stage, and a third judgment result and a fourth judgment result are respectively obtained by judging whether the actual delay of answering is greater than a preset answering delay and judging whether the actual time length consumed by the answering is greater than a preset answering time length; and the actual learning concentration at the online answering stage is finally determined according to the third judgment result and the fourth judgment result.

A simple dichotomy-based implementation mode for analyzing that the actual learning concentration is concentration/non-concentration may be referred to the flowchart shown in Fig. 4, including the following steps:

Step 401: acquiring an actual delay of answering and an actual time length consumed by the answering of the user at the online answering stage of the online learning.

The delay of answering refers to a period from the time when an online answering application gives a question to be answered to the time when a user starts first human-computer interaction with the online learning application. The delay of answering may be simply understood as user's response speed in response to an answering signal. If the user concentrates more, the actual delay of answering is usually shorter. If the user concentrates less, the actual delay of answering is longer. The time length consumed by the answering refers to a period from the time when the user starts the first human-computer interaction with the online learning application to the time when the online learning application receives an answering end signal, where the answering end signal may be generated by clicking an "end" button after the user answers the question, or may also be automatically generated after the online learning application waits for a maximum time length preset for the answering and still does not receive a signal indicating that the "end" button is clicked. Except the influence of difficulty of the question on the time length required to answer the question, the time length consumed by the answering may represent whether the user currently concentrates on the answering.

Step 402: judging whether the actual delay of answering is greater than a preset answering delay; if not, performing step 403; if yes, performing step 404.

Step 403: judging whether the actual time length consumed by the answering is greater than a preset answering time; if not, performing step 405; if yes, performing step 404.

This step is based on the result of judgment in step 402 that the actual delay of answering is not greater than the preset answering delay, which indicates that the user's actual delay of answering is relatively short. In order to further confirm whether the user currently really concentrates on the online learning application, the execution body further judges whether the actual time length consumed by the answering is greater than the preset answering time in this step.

Step 405: determining that the user currently does not concentrate on the online learning application.

This step is based on the result of judgment in step 402 that the actual delay of answering is greater than the preset answering delay and the result of judgment in step 403 that the actual time length consumed by the answering is greater than the preset answering time length. The longer actual delay of answering indicates that the user currently does not concentrate on the playback interface of the online learning application, while the shorter actual delay of answering and the longer actual time length consumed by the answering indicate that the user is likely to quickly check and click an answer interface based on a prompt of a question to be answered, but quickly switch back to other interface, that is, the user does not concentrate on answering, but finally the answering ends or the prompt return click ends or the answering automatically ends due to timeout, which may be determined as the user currently does not concentrate on the online learning application, that is, there is a period during which the user's actual learning concentration is non-concentration at the online answering stage.

Step 404: determining that the user currently concentrates on the online learning application.

This step is based on the result of judgment in step 403 that the actual time length consumed by the answering is not greater than the preset answering time length. Based on the user's short delay of answering and short time length consumed by the answering, it may be fully determined that the user currently concentrates on the answering stage, that is, there is no period during which the user's actual learning concentration is non-concentration at the online answering stage.

For the online answering stage, the process 400 shown in Fig. 4 provides a way to draw the conclusion that the user currently concentrates on the online learning application through double judgments, which can effectively guarantee the accuracy of the conclusion and reduce the misjudgment rate. In order to further excluded the influence of quick response and randomly answering on the accuracy of the above judgment results, the results of the judgments may be corrected in combination with the accuracy of the answers.

For the voice interaction stage, the user's actual mouth movement and actual voice data at this stage are used as the learning feature data, and whether the user currently concentrates on the online learning application is determined by the result of the judgment on whether the actual mouth movement is consistent with the content of the actual voice data.

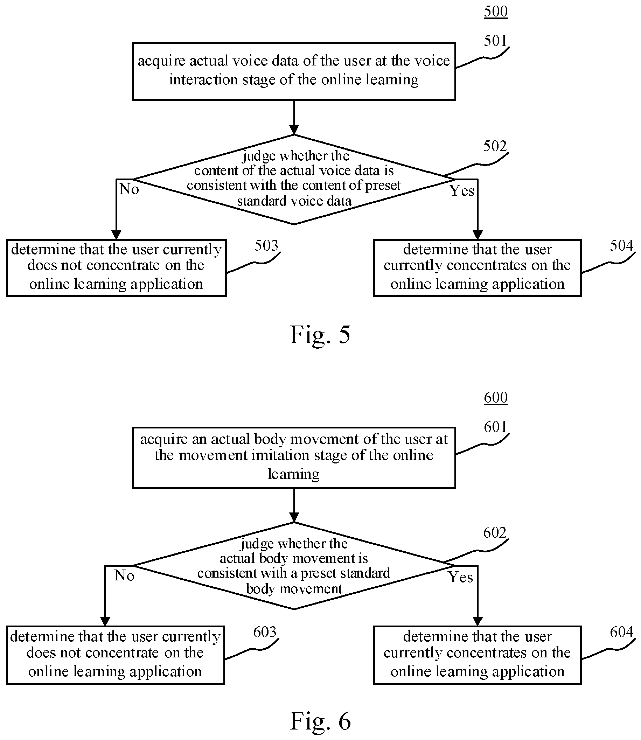

A simple dichotomy-based implementation mode for analyzing that the actual learning concentration is concentration/non-concentration may be referred to the flowchart shown in Fig. 5, including the following steps:
Step 501: acquiring actual voice data of the user at the voice interaction stage of the online learning.

Step 502: judging whether the content of the actual voice data is consistent with the content of preset standard voice data.

Under normal circumstances, online learning applications capable of providing voice interactive learning have the ability to parse the collected actual voice data into actual content. By judging whether the content of the actual voice data is consistent with the content of the preset standard voice data as a standard answer in this step, it can be effectively found whether the user has spoken the correct voice content according to the requirement of the online learning application.

Step 503: determining that the user currently does not concentrate on the online learning application.

This step is based on the result of judgment in step 502 that the content of the actual voice data is inconsistent with the content of the preset standard voice data. When the user has not spoken the voice content according to the requirement of the online learning application, it is determined that the user does not concentrate on the online learning application, that is, there is a period during which the user's actual learning concentration is non-concentration at the voice interaction stage.

Step 504: determining that the user currently concentrates on the online learning application.

This step is based on the result of judgment in step 502 that the content of the actual voice data is consistent with the content of the preset standard voice data. When the user has spoken the corresponding voice content according to the requirement of the online learning application, it is determined that the user currently concentrates on the online learning application, that is, there is no period during which the user's actual learning concentration is non-concentration at the voice interaction stage.

For the voice interaction stage, the process 500 shown in Fig. 5 provides a way to draw the conclusion that the user currently concentrates on the online learning application by judging whether the actual voice content is consistent with the standard voice content, which can effectively discover user's "suspended learning" and "fake learning" behaviors.

For the movement imitation stage, user's actual body movement at this stage is used as the learning feature data, and whether the user currently concentrates on the online learning application is determined by the result of judgment on whether the actual body movement is consistent with a preset standard body movement.

A simple dichotomy-based implementation mode for analyzing that the actual learning concentration is concentration/non-concentration may be referred to the flowchart shown in Fig. 6, including the following steps:
Step 601: acquiring an actual body movement of the user at the movement imitation stage of the online learning.

Step 602: judging whether the actual body movement is consistent with a preset standard body movement, and if yes, performing step 604, otherwise performing step 603.

Under normal circumstances, online learning applications capable of providing movement imitation learning should store standard answers as standard body movements in advance. Therefore, the acquired actual body movement is analyzed and compared with the standard body movement to determine whether the user is performing the body movement which is required by the online learning application. Considering the actual differences in the body movements tried by different users, the consistency here does not mean that the actual body movement is completely the same as the standard body movement, but a looser consistency ratio may be set as the threshold. This solution is mainly used to discover whether the user really tries to do the required body movement in accordance with the online learning application, and is used to discover the phenomenon of "false learning" and "suspended learning" without any movement because of non-concentration on the online learning application.

Step 603: determining that the user currently does not concentrate on the online learning application.

This step is based on the result of judgment in step 602 that the actual body movement is inconsistent with the preset standard body movement, which will be determined that the user currently does not concentrate on the online learning application, that is, there is a period during which the user's actual learning concentration is non-concentration during the movement imitation stage.

Step 604: determining that the user currently concentrates on the online learning application.

This step is based on the result of judgment in step 602 that the actual body movement is consistent with the preset standard body movement, which will be determined that the user currently concentrates on the online learning application, that is, there is no period during which the user's actual learning concentration is non-concentration during the movement imitation stage.

For the movement imitation stage, the process 600 shown in Fig. 6 provides a way to draw the conclusion that the user currently concentrates on the online learning application by determining that the actual body movement is consistent with the preset standard body movement, which can effectively discover user's "suspended learning" and "fake learning" behaviors.

To deepen understanding, an embodiment of the present disclosure provides a specific implementation scheme in combination with an application scenario. A user A is supposed to use an online English learning application installed on his tablet computer to conduct online English learning. According to the course arrangement, the online English learning application designs today's online English learning into a watching stage, a choice answering stage, and a voice follow-up stage in sequence.

The online English learning application acquires an actual face orientation of the user A through a front camera at the watching stage, acquires click information through a touch screen by using a monitor at the choice answering stage, further processes the click information into an actual delay of answering, and collects actual voice data through a sound pick-up at the voice follow-up stage.

The online English learning application controls the tablet computer to send learning feature data corresponding to each stage to a server B for analysis.

The server B judges, according to the actual face orientation at the watching stage, whether the actual face orientation is perpendicular to the playback interface of the online English learning application, and finds that the user's actual face orientation is not perpendicular to the playback interface of the online English learning application in a period at this stage which starts from the 10 minutes to the 15 minutes and 26 seconds, and determines this period as a first period that the user does not concentrate on the online English learning application.

The server B judges, according to the actual delay of answering at the choice answering stage, whether the actual delay of answering is greater than a preset answering delay, and finds that user's delays of answering three choice questions are greater than the preset answering delay of 10 seconds in a period at this stage which starts from 5 minutes 10 seconds to 8 minutes 20 seconds, and determines this period as a second period that the user does not concentrate on the online English learning application.

The server B judges, according to the actual voice data at the voice follow-up stage, whether the actual voice data is consistent with standard voice data pre-stored as a standard answer, and finds that the user's actual voice data is greatly different from the standard voice data pre-stored as a standard answer in a period at this stage which starts from 3 minutes 5 seconds to 7 minutes 24 seconds, and determines this period as a third period that the user does not concentrate on the online English learning application.

According to the periods and information associated to the corresponding learning content recorded in the background, the server B marks the learning content corresponding to the first period, second period, and third period as the key learning content, and sends indexes of the key learning content to the tablet computer of the user A, the indexes are received by the online English learning application of the tablet computer, and the online English learning application determines complete key learning content corresponding to the indexes in a local storage space according to the received indexes, and serves the content as review content for learning by the user A before next online learning.

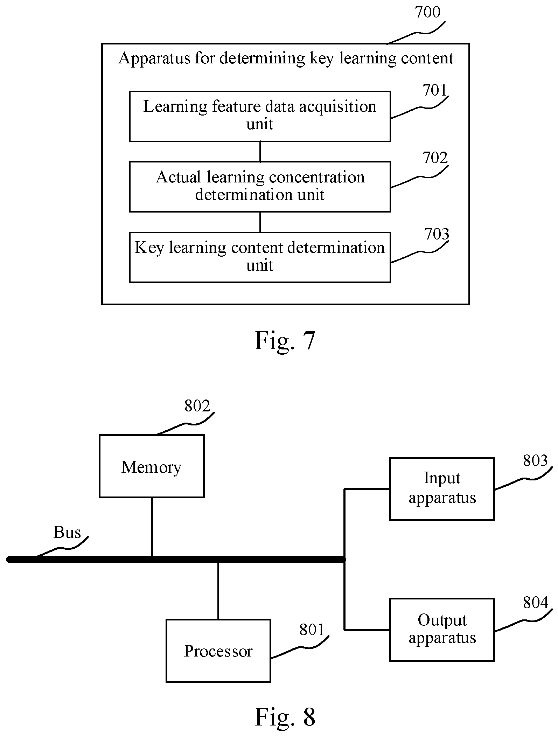

Further referring to Fig. 7, as an implementation of the method shown in the above figures, an embodiment of the present disclosure provides an apparatus for determining key learning content. The embodiment of the apparatus corresponds to the embodiment of the method shown in Fig. 2, and the apparatus may be applied to various electronic devices.

As shown in Fig. 7, the apparatus 700 for determining key learning content in this embodiment may include: a learning feature data acquisition unit 701, an actual learning concentration determination unit 702, and a key learning content determination unit 703. The learning feature data acquisition unit 701 is configured to acquire learning feature data of a user at different interactive learning stages of online learning, where the interactive learning stage includes at least one of: a watching stage, an online answering stage, a voice interaction stage, or a movement imitation stage; the actual learning concentration determination unit 702 is configured to analyze learning feature data corresponding to an interactive learning stage by using a preset analysis mode corresponding to the interactive learning stage, to obtain an actual learning concentration corresponding to the interactive learning stage; and the key learning content determination unit 703 is configured to determine, according to the actual learning concentration, a target period with an actual learning concentration not meeting a preset learning concentration requirement, and determine learning content corresponding to the target period as the key learning content.

In this embodiment, in the apparatus 700 for determining key learning content: the specific processing of the learning feature data acquisition unit 701, the actual learning concentration determination unit 702, and the key learning content determination unit 703 and the technical effects brought by them may be referred to the related descriptions of steps 201-203 in the corresponding embodiment of Fig. 2, and details are not described herein again.

In some optional implementations of this embodiment, for the watching stage, the learning feature data acquisition unit 701 may be further configured to: acquire an actual face orientation and an actual viewpoint position of user during the watching stage of the online learning; and correspondingly, for the watching stage, the actual learning concentration determination unit 702 may be further configured to: in response to the actual face orientation being perpendicular to a playback interface of an online learning application or the actual viewpoint position falling within a playback interface region of the online learning application, determining that the actual learning concentration at the watching stage is concentration; and in response to the actual face orientation being not perpendicular to the playback interface or the actual viewpoint position not falling within the playback interface region, determining that the actual learning concentration at the watching stage is non-concentration.

In some optional implementations of this embodiment, for the online answering stage, the learning feature data acquisition unit 701 may be further configured to: acquire an actual delay of answering and an actual time length consumed by the answering of the user at the online answering stage of the online learning; and correspondingly, for the online answering stage, the actual learning concentration determination unit 702 may be further configured to: in response to the actual delay of the answering being greater than a preset answering delay or the actual time length consumed by the answering being greater than a preset answering time length, determining that the actual learning concentration at the online answering stage is non-concentration; and in response to the actual delay of the answering being not greater than the preset answering delay or the actual time length consumed by the answering being not greater than the preset answering time length, determining that the actual learning concentration at the online answering stage is concentration.

In some optional implementations of this embodiment, for the voice interaction stage, the learning feature data acquisition unit 701 may be further configured to: acquire actual voice data of the user at the voice interaction stage of the online learning; and correspondingly, for the voice interaction stage, the actual learning concentration determination unit 702 may be further configured to: in response to the content of the actual voice data being consistent with the content of preset standard voice data, determining that the actual learning concentration at the voice interaction stage is concentration; and in response to the content of the actual voice data being inconsistent with the content of the preset standard voice data, determining that the actual learning concentration at the voice interaction stage is non-concentration.

In some optional implementations of this embodiment, for the movement imitation stage, the learning feature data acquisition unit 701 may be further configured to: acquire an actual body movement of the user at the movement imitation stage of the online learning; and correspondingly, for the movement imitation stage, the actual learning concentration determination unit 702 may be further configured to: in response to the actual body movement being consistent with a preset standard body movement, determining that the actual learning concentration at the movement imitation stage is concentration; and in response to the actual body movement being inconsistent with the preset standard body movement, determining that the actual learning concentration at the movement imitation stage is non-concentration.

In some optional implementations of this embodiment, the apparatus 700 for determining key learning content may further include: a pushing unit configured to, after determining the learning content corresponding to the target period as the key learning content, push the key learning content to an online learning client of the user, so that the online learning client presents the key learning content to the user again.

In some optional implementations of this embodiment, the pushing unit may be further configured to: after determining the learning content corresponding to the target period as the key learning content, push the key learning content to the online learning client of the user, so that the online learning client presents the key learning content to the user as review content.

This embodiment exists as an apparatus embodiment corresponding to the above method embodiment. Different from the reverse derivation solution provided by the prior art, the apparatus for determining key learning content according to an embodiment of the present disclosure is to positively and accurately determine a real-time concentration parameter by collecting feature data related to the user's learning concentration degree of the user at each interactive learning stage of the online learning process, and determine content corresponding to a non-concentration period as the key learning content according to the concentration parameter. By combining different learning feature data collected at different interactive learning stages by different collection means, the determined learning concentration at each stage can be more accurate, thereby ensuring that the determined key learning content is highly targeted, shortening user's time spent on learning the key learning content as much as possible, and improving the efficiency of online learning.

According to an embodiment of the present disclosure, an electronic device and a readable storage medium are provided.

As shown in Fig. 8, which is a block diagram of an electronic device of a method for determining key learning content according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 8, the electronic device includes: one or more processors 801, a memory 802, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 8, one processor 801 is used as an example.

The memory 802 is a non-transitory computer readable storage medium provided by an embodiment of the present disclosure. The memory stores instructions executable by at least one processor, so that the at least one processor performs the method for determining key learning content provided by embodiments of the present disclosure. The non-transitory computer readable storage medium of embodiments of the present disclosure stores computer instructions for causing a computer to perform the method for determining key learning content provided by embodiments of the present disclosure.

The memory 802, as a non-transitory computer readable storage medium, may be used to store non-transitory software programs, non-transitory computer executable programs and modules, such as program instructions/modules corresponding to the method for determining key learning content in embodiments of the present disclosure (for example, the learning feature data acquisition module 701, the actual learning concentration determination module 702, and the key learning content determination module 703 shown in Fig. 7). The processor 801 executes the non-transitory software programs, instructions, and modules stored in the memory 802 to execute various functional applications and data processing of the server, that is, to implement the method for determining key learning content in the foregoing method embodiment.

The memory 802 may include a storage program area and a storage data area, where the storage program area may store an operating system and at least one function required application program; and the storage data area may store data created by the use of the electronic device according to the method for determining key learning content, etc. In addition, the memory 802 may include a high-speed random access memory, and may also include a non-transitory memory, such as at least one magnetic disk storage device, a flash memory device, or other non-transitory solid-state storage devices. In some embodiments, the memory 802 may optionally include memories remotely provided with respect to the processor 801, and these remote memories may be connected to the electronic device of the method for determining key learning content through a network. Examples of the above network include but are not limited to the Internet, intranet, local area network, mobile communication network, and combinations thereof.

The electronic device of the method for key learning content determination may further include: an input apparatus 803 and an output apparatus 804. The processor 801, the memory 802, the input apparatus 803, and the output apparatus 804 may be connected through a bus or in other methods. In Fig. 8, connection through a bus is used as an example.

The input apparatus 803 may receive input digital or character information, and generate key signal inputs related to user settings and function control of the electronic device of the method for determining key learning content, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet.

The computer system may include a client and a server. The client and the server are generally far from each other and usually interact through the communication network. The relationship between the client and the server is generated by computer programs that run on the corresponding computer and have a client-server relationship with each other.

Different from the reverse derivation solution provided by the prior art, the technical solution provided by the embodiment of the present disclosure is to positively and accurately determine a real-time concentration parameter by collecting feature data related to the degree of user's learning concentration from each interactive learning stage of user's online learning process, and determine content corresponding to a non-concentration period as the key learning content according to the parameter. By combining different learning feature data acquired from different interactive learning stages by different collection means, the user's learning concentration can be determined more accurately, thereby ensuring that the determined key learning content is highly targeted, and shortening user's time on learning the key learning content as much as possible.

Different from the reverse-derivation solution provided by the prior art, the method for determining key learning content according to embodiments of the present disclosure is to positively and accurately determine a real-time concentration parameter by collecting feature data related to the learning concentration degree of the user from each interactive learning stage of user's online learning process, and determine content corresponding to a non-concentration period as the key learning content according to the concentration parameter. By combining different learning feature data collected at different interactive learning stages by different collection means, the determined learning concentration at each stage can be more accurate, thereby ensuring that the determined key learning content is highly targeted, shortening user's time spent on learning the key learning content as much as possible.

It should be understood that the various forms of processes shown above may be used to reorder, add, or delete steps. For example, the steps described in embodiments of the present disclosure may be performed in parallel, sequentially, or in different orders. As long as the desired results of the technical solution disclosed in embodiments of the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method for determining key learning content, comprising:
acquiring (201) learning feature data of a user at different interactive learning stages of online learning, wherein the interactive learning stage comprises at least one of: a watching stage, an online answering stage, a voice interaction stage, or a movement imitation stage;
analyzing (202) learning feature data corresponding to an interactive learning stage by using a preset analysis mode corresponding to the interactive learning stage, to obtain an actual learning concentration corresponding to the interactive learning stage; and
determining (203), according to the actual learning concentration, a target period with an actual learning concentration not meeting a preset learning concentration requirement, and determining learning content corresponding to the target period as the key learning content.

2. The method according to claim 1, wherein for the watching stage, the acquiring learning feature data of the user at the watching stage of the online learning comprises:
acquiring (301) an actual face orientation and an actual viewpoint position of user during the watching stage of the online learning; and
correspondingly, the analyzing the learning feature data corresponding to the watching stage by using a preset analysis mode corresponding to the watching stage to obtain an actual learning concentration at the watching stage comprises:
in response to the actual face orientation being perpendicular to a playback interface of an online learning application or the actual viewpoint position falling within a playback interface region of the online learning application, determining (304) that the actual learning concentration at the watching stage is concentration; and
in response to the actual face orientation being not perpendicular to the playback interface or the actual viewpoint position not falling within the playback interface region, determining (303) that the actual learning concentration at the watching stage is non-concentration.

3. The method according to claim 1, wherein for the online answering stage, the acquiring learning feature data of the user at the online answering stage of the online learning comprises:
acquiring (401) an actual delay of answering and an actual time length consumed by the answering of the user at the online answering stage of the online learning; and
correspondingly, the analyzing the learning feature data corresponding to the online answering stage by using a preset analysis mode corresponding to the online answering stage, to obtain an actual learning concentration at the online answering stage comprises:
in response to the actual delay of the answering being greater than a preset answering delay or the actual time length consumed by the answering being greater than a preset answering time length, determining (405) that the actual learning concentration at the online answering stage is non-concentration; and
in response to the actual delay of the answering being not greater than the preset answering delay or the actual time length consumed by the answering being not greater than the preset answering time length, determining (404) that the actual learning concentration at the online answering stage is concentration.

4. The method according to claim 1, wherein for the voice interaction stage, the acquiring learning feature data of the user at the voice interaction stage of the online learning comprises:
acquiring (501) actual voice data of the user at the voice interaction stage of the online learning; and
correspondingly, the analyzing the learning feature data corresponding to voice interaction stage by using a preset analysis mode corresponding to the voice interaction stage, to obtain an actual learning concentration at the voice interaction stage comprises:
in response to the content of the actual voice data being consistent with the content of preset standard voice data, determining (504) that the actual learning concentration at the voice interaction stage is concentration; and
in response to the content of the actual voice data being inconsistent with the content of the preset standard voice data, determining (503) that the actual learning concentration at the voice interaction stage is non-concentration.

5. The method according to claim 1, wherein for the movement imitation stage, the acquiring learning feature data of the user at the movement imitation stage of the online learning comprises:
acquiring (601) an actual body movement of the user at the movement imitation stage of the online learning; and
correspondingly, the analyzing the learning feature data corresponding to the movement imitation stage by using a preset analysis mode corresponding to the movement imitation stage, to obtain an actual learning concentration at the movement imitation stage comprises:
in response to the actual body movement being consistent with a preset standard body movement, determining (604) that the actual learning concentration at the movement imitation stage is concentration; and
in response to the actual body movement being inconsistent with the preset standard body movement, determining (603) that the actual learning concentration at the movement imitation stage is non-concentration.

6. The method according to any one of claims 1 to 5, after determining the learning content corresponding to the target period as the key learning content, further comprising:
pushing the key learning content to an online learning client of the user, so that the online learning client presents the key learning content to the user again.

7. The method according to claim 6, wherein the online learning client presents the key learning content to the user once again, comprising:
the online learning client presents the key learning content to the user as review content.

8. An apparatus (700) for determining key learning content, comprising:
a learning feature data acquisition module (701), configured to acquire (201) learning feature data of a user at different interactive learning stages of online learning, wherein the interactive learning stage comprises at least one of: a watching stage, an online answering stage, a voice interaction stage, or a movement imitation stage;
an actual learning concentration determination unit (702), configured to analyze (202) learning feature data corresponding to an interactive learning stage by using a preset analysis mode corresponding to the interactive learning stage, to obtain an actual learning concentration corresponding to the interactive learning stage; and
a key learning content determination unit (703), configured to determine (203), according to the actual learning concentration, a target period with an actual learning concentration not meeting a preset learning concentration requirement, and determine learning content corresponding to the target period as the key learning content.

9. The apparatus according to claim 8, wherein for the watching stage, the learning feature data acquisition unit (701) is further configured to:
acquire (301) an actual face orientation and an actual viewpoint position of user during the watching stage of the online learning; and
correspondingly, for the watching stage, the actual learning concentration determination unit is further configured to:
in response to the actual face orientation being perpendicular to a playback interface of an online learning application or the actual viewpoint position falling within a playback interface region of the online learning application, determining (304) that the actual learning concentration at the watching stage is concentration; and
in response to the actual face orientation being not perpendicular to the playback interface or the actual viewpoint position not falling within the playback interface region, determining (303) that the actual learning concentration at the watching stage is non-concentration.

10. The apparatus according to claim 8, wherein for the online answering stage, the learning feature data acquisition unit (701) is further configured to:
acquire (401) an actual delay of answering and an actual time length consumed by the answering of the user at the online answering stage of the online learning; and
correspondingly, for the online answering stage, the actual learning concentration determination unit is further configured to:
in response to the actual delay of the answering being greater than a preset answering delay or the actual time length consumed by the answering being greater than a preset answering time length, determining (405) that the actual learning concentration at the online answering stage is non-concentration; and
in response to the actual delay of the answering being not greater than the preset answering delay or the actual time length consumed by the answering being not greater than the preset answering time length, determining (404) that the actual learning concentration at the online answering stage is concentration.

11. The apparatus according to claim 8, wherein for the voice interaction stage, the learning feature data acquisition unit (701) is further configured to:
acquire (501) actual voice data of the user at the voice interaction stage of the online learning; and
correspondingly, for the voice interaction stage, the actual learning concentration determination unit is further configured to:
in response to the content of the actual voice data being consistent with the content of preset standard voice data, determining (504) that the actual learning concentration at the voice interaction stage is concentration; and
in response to the content of the actual voice data being inconsistent with the content of the preset standard voice data, determining (503) that the actual learning concentration at the voice interaction stage is non-concentration.

12. The apparatus according to claim 8, wherein for the movement imitation stage, the learning feature data acquisition unit (701) is further configured to:
acquire (601) an actual body movement of the user at the movement imitation stage of the online learning; and
correspondingly, for the movement imitation stage, the actual learning concentration determination unit is further configured to:
in response to the actual body movement being consistent with a preset standard body movement, determining (604) that the actual learning concentration at the movement imitation stage is concentration; and
in response to the actual body movement being inconsistent with the preset standard body movement, determining (603) that the actual learning concentration at the movement imitation stage is non-concentration.

13. An electronic device, comprising:
at least one processor; and
a memory communicatively connected with the at least one processor; wherein,
the memory stores instructions executable by the at least one processor, and the instructions, when executed by the at least one processor, causes the at least one processor to execute the method for determining key learning content according to any one of claims 1-7.

14. A non-transitory computer-readable storage medium storing computer instructions, wherein the computer instructions, when executed by a processor, cause the processor to execute the method for determining key learning content according to any one of claims 1-7.

15. A computer program product comprising a computer program, the computer program, when executed by a processor, causes the processor to implement the method according to any one of claims 1-7.
